Europäisches Patentamt

European Patent Office

Office européen des brevets

(11) Publication number: **0 384 759**
**A2**

# (12) EUROPEAN PATENT APPLICATION

(21) Application number: **90301911.5**

(22) Date of filing: **22.02.90**

(51) Int. Cl.⁵: **F16H 39/40**

(30) Priority: **22.02.89 JP 42836/89**
**22.02.89 JP 42837/89**

(43) Date of publication of application:
**29.08.90 Bulletin 90/35**

(84) Designated Contracting States:
**DE FR GB IT**

(71) Applicant: **Atake, Minoru**
**579-6, Ohoiso Ohoiso-machi**
**Naka-gun Kanagawa-ken(JP)**

(72) Inventor: **Atake, Minoru**
**579-6, Ohoiso Ohoiso-machi**
**Naka-gun Kanagawa-ken(JP)**

(74) Representative: **Godwin, Edgar James et al**
**MARKS & CLERK 57-60 Lincoln's Inn Fields**
**London, WC2A 3LS(GB)**

(54) **Differential rotation control device.**

(57) Two torque transmission assemblies (6A,6B) have pump-driving and pump driven means which are pump-operated by differential rotation between two rotors (7, 8A/B), two pump assemblies (19A,19B) circularly communicated with the pump-driving and pump driven means of the torque transmission assemblies, and means for controlling fluid flows between the pump inlet and outlet ports of each of the pump assemblies (19A,19B) individually.

FIG. 1

EP 0 384 759 A2

# DIFFERENTIAL ROTATION CONTROL DEVICE

This invention relates to a differential rotation control device with a hydraulic assembly and more particular to a differential rotation control device mainly intended for use as a differential or a torque splitter for a car, truck, or the like.

A differential gear device used for cars is well known in the prior art as an essential part of the car construction, wherein said differential gear device automatically actuates according to the difference between both loads of left and right driving wheels. However, the differential rate of said device is not adjustable to the varied driving modes and set on a static condition because of its geared mechanism. Therefor, in order to maintain a straight driving mode in a high speed, for instance, means for a differential lock may be further included for car construction. Generally, a transmission system for car includes a complicated oil-control system capable of adjusting the differential rate corresponding to the varied driving modes.

A differential gear device is also used for car having four driving wheels in order to distribute torque to front and rear wheels with aid of an oil-control system adapted to control the torque distributing rate according to the driving mode.

Namely, the car construction including said differential gear device must use a high technical and complicated control system together with a high cost to adjust the differential rate or torque distributing rate.

An object of this invention is to provide a differential rotation control device with a hydraulic assembly capable of adjusting a differential rate or torque distributing rate with a simple construction having means for controlling pressured oil of an hydraulic variable transmission system such as a torque transmission device described in U.S. Serial No. 07/456,143.

In an aspect of this invention, there is provided with a differential rotation control device with a hydraulic assembly comprising two torque transmission assemblies each of which includes a first rotor with a pump-driven means and a second rotor with a pup-driving means caused said pump-driven means to be pumped by a differential rotation between said first and second rotors, said second rotor having an inlet port receiving fluid to be pumped and an outlet port delivering said fluid pumped; two pump assemblies corresponding to said torque transmission assemblies respectively, said pump assemblies including two pumps each having a pump inlet port communicated with the outlet port and a pump outlet port communicated with the inlet port respectively in accordance with said torque transmission assemblies; and means for controlling fluid flows between said pump inlet and pump outlet ports of each of said pump assemblies individually.

The other features and advantages of this invention will be apparently described herein after with reference to the accompany drawings as follows.

Fig. 1 is a vertical cross section of a differential rotation control device embodying this invention;

Fig. 2 is a horizontal cross section of said device illustrated in Fig. 1;

Fig. 3 is a partial vertical section of said device wherein means for controlling fluid flows is illustrated at a shifted position;

Figs. 4 to 11 are cross-sectional views along IV -IV to XI - XI lines on Fig. 1 respectively;

Fig. 12 is a vertical cross section of a differential rotation control device of another embodiment of this invention;

Fig. 13 is a horizontal cross section of said device illustrated in Fig. 12; and

Figs. 14 to 21 are cross-sectional views along XII - XII to XXI - XXI lines on Fig. 12 respectively.

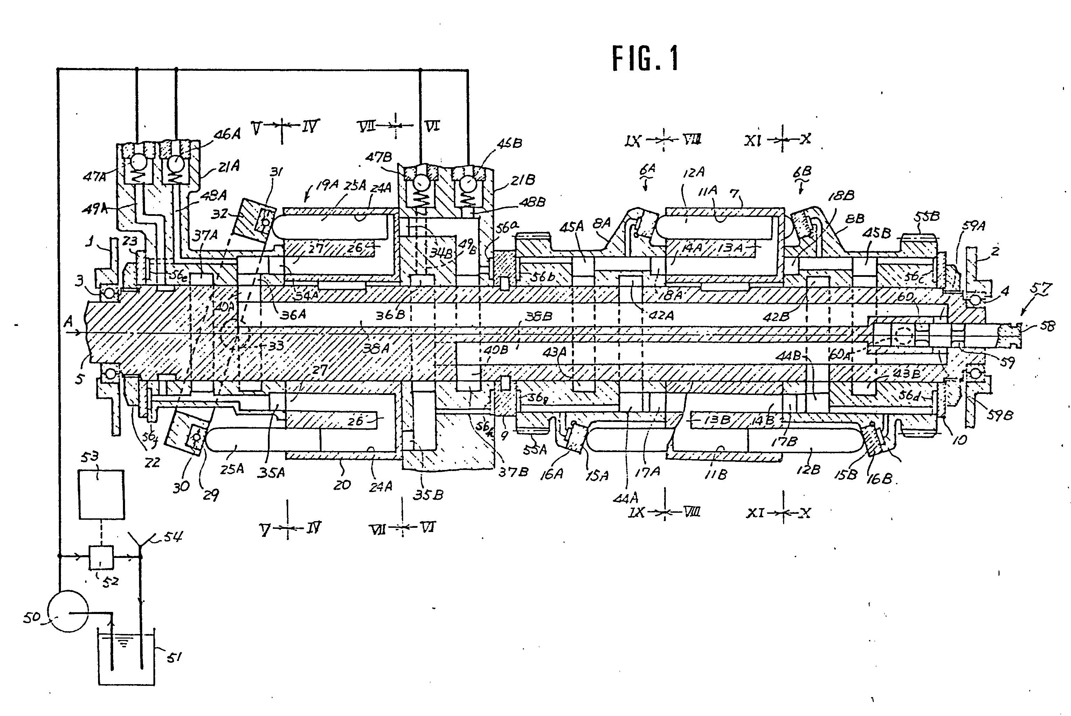

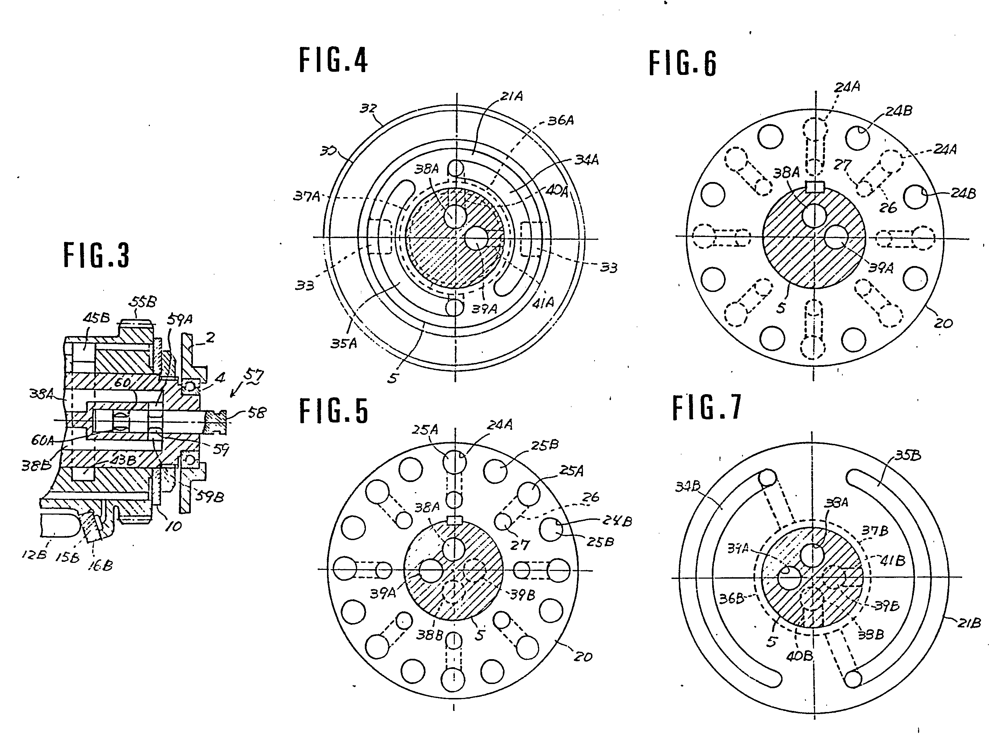

A differential rotation control device with a hydraulic assembly of this invention is illustrated in Figs. 1 to 11 as a first embodiment. In said embodiment, said device comprises two torque transmission assemblies 6A and 6B which include a common rotating shaft 5 journalled to bearings 3 and 4 mounted on both side frames 1 and 2. Said torque transmission assemblies 6A and 6B include a first rotor 7 with pump-driven means which is adapted commonly to said assemblies in this embodiment, and two second rotors 8A and 8B with pump-driving means. Said first rotor 7 is rigidly supported to said rotating shaft 5 by means of a key member, and said second rotors 8A and 8B are rotatably supported to said rotating shaft 5 in order to cause said pump-driven means to be pumped by a differential rotation between said first and second rotors 7 and 8A, 8B. In order to prevent the axial movement of said second rotors 8A and 8B, the former is disposed between said first rotor 7 and a metal 9 attached to said rotating shaft 5 and the latter is disposed between said first rotor 7 and a metal 10 supported to said rotating shaft 5 by means of a screw nut threaded to said shaft 5.

Said pump-driven means of said first rotor 7 includes a plurality of cylinder bores 11A equally spaced to one end of said rotor 7 and a plurality of cylinder bores 11B equally spaced to the other end of said rotor 7 in a manner to be arranged on a prescribed pitch circle co-axial to the rotation of said rotor 7 and alternately to every bores 11A and 11B, and pluralities of plunger members 12A and 12B slidably inserted into said cylinder bores 11A and 11B respectively. Preferably, said plunger members 12A and 12B and cylinder bores 11A and 11B are mutually oil-sealed. Said cylinder bores 11A and 11B are individually communicated through pluralities of radial extending passages 13A and 13B with pluralities of ports 14A and 14B openning to face to said second rotors 8A and 8B on a prescribed pitch circle smaller than that of said bores 11A and 11B.

Said pump-driving means of said second rotors 8A and 8B have swash plates 16A and 16B with driving surfaces 15A and 15B inclin said rotating shaft 5 and supported rotatably to said inclined surfaces 15A and 15B, so as to guide the outer ends of said plunger members 12A and 12B. Said second rotors 8A and 8B each further includes two half circular ports 17A and 17B ( 18A and 18B ) as an inlet port and an outlet port disposed to both sides of inclination of said swash plate 16A ( 16B ).

Said differential rotation control device further comprises two pump assemblies 19A and 19B corresponding to both torque transmission assemblies 6A and 6B. In this embodiment, said pump assemblies 19A and 19B include a common pump rotor 20 rigidly supported to said rotating shaft 5 by means of a key member, and two pump stators 21A and 21B disposed to both ends of said rotor 20 and mounted on or integrally formed to said frame of said device. Said stators 21A and 21B surround said rotating shaft 5 and supported between said rotor 20 and a metal 23 supported to said rotating shaft 5 by means of a screw nut 22 threaded to said shaft 5 and between said rotor 20 and said metal 9 mentioned above, respectively. To both ends of said pump rotor 20 are opened pluralities of cylinder bores 24A and 24B separated to two groups corresponding to said pump assemblies 19A and 19B, said cylinder bores 24A and 24B being equally spaced and alternately arranged to a prescribed pitch circle coaxial to the axis of said shaft 5, and pluralities of plunger members 25A and 25B are slidably inserted into said cylinder bores 24A and 24B. If necessary, oil-seal means may be adapted to slide in tight between each of said plunger members and cylinder bores. Said cylinder bores 24A are individually communicated through radial extending passages 26 with a plurality of ports 27 opened to one end of said rotor 20 so as to be equally spaced to a prescribed pitch circle smaller than that of said cylinder bores 24A and facing to said pump stator 21A, and said cylinder bores 24B are opened as ports 28 to the other end of said rotor 20 so as to face to said pump stator 21B.

Said pump assembly 19A in this embodiment further includes a swash plate 30 with a driving surface 29 adjustably inclined to a cross surface normal to the axis of said shaft 5, and a supporting plate 32 having a thrust bearing 31 through which said swash plate 30 is rotatably supported thereto and a pair of axes 33 perpendicular to the axis of said shaft 5 so as to support said supporting plate 32 rotatably to said stator 21A.

Furthermore, to said pump stators 21A and 21B are opened pump ports 34A and 34B, and 35A and 35B formed into half circular shapes separated to both sides of inclination of said swash plate 30 and facing to said ports 27 and 28.

Said pump ports 34A and 34B, and 35A and 35B are individually communicated with annular passages 36A and 36B, and 37A and 37B formed to inner surfaces of said pump stators 21A and 21B surrounding said rotating shaft 5 respectively, and communicated with axial passages 38A and 38B, and 39A and 39B formed to said rotating shaft 5 through radial extending passages 40A and 40B, and 41A and 41B. Said passages 38A and 38B, and 39A and 39B are communicated with annular passages 42A and 42B, and 43A and 43B formed to inner surfaces of said rotors 8A and 8B surrounding said rotating shaft 5. Said annular passages 42A and 42B, and 43A and 43B are communicated with pump ports 17A and 17B, and 18A and 18B of the corresponding rotors 8A and 8B through passages 44A and 44B, and 45A and 45B.

With said pump ports 34A and 34B, and 35A and 35B are individually communicated check valves 46A and 46B, and 47A and 47B through passages 48A and 48B, and 49A and 49B. An oil pump 50 is adapted to supply pressured fluid to each of said check valves and the suction port of said oil pump 50 is communicated with an oil tank 51 and the delivery port thereof is communicated with said oil tank 51 through the bypath of a pressure regulating valve 52 with its oil pressure being adjusted by means of control cystem 53.

Fluid leaked out from any portions of said differential rotation control device such as ports and passages opened is received to an oil pan 54 and returned to said oil tank 51.

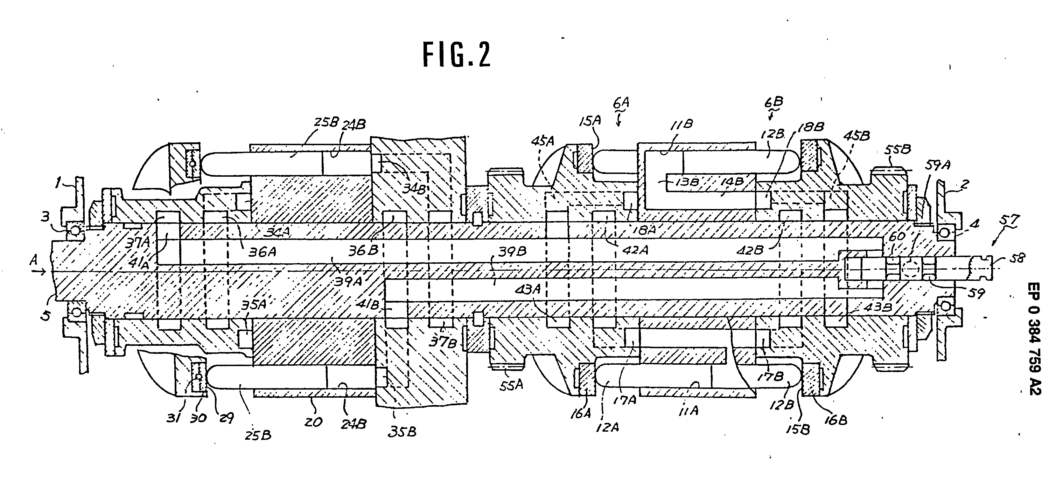

A reference signal (A) illustrated in Figs. 1 and 2 is an input power for rotating said rotating shaft 5 and reference numbers 55A and 55B are output gears formed to said rotors 8A and 8B.

In order to control pressure balances among said metals 9, 10, 23, etc., in an axial direction, oil pressures from said passages mentioned above are applied to ports 56A, 56B •••• as back up pressures.

Said differential rotation control device further comprises means for regulating fluid flows between said pump ports 34A and 34B, and 35A and 35B. Said regulating means consists of a spool valve means 57 which includes a spool member 58 with two annular grooves 59 and 60 individually communicating said passages 38A and 38B, and 39A and 39B to each other through valve portions 59A and 59B, and 60A and 60B.

Accordingly, when the fluid such as pressured oil is wholly filled to said cylinder bores 11A, 11B and 24A, 24B, and passages communicated with said bores, torque power is transmitted to said first rotor 7 and pump rotor 20 via said rotating shaft 5, and said oil pump 50 is driven so as to maintain the pressure of said bores and passages to a prescribed value determined by said pressure control valve 52, said torque power with a different rotation is transmitted from said first rotor 7 to said second rotors 8A and 8B. Namely, as the first rotor is rotated for a rotation speed R, the second rotors are rotated for rotation speeds rA and rB due to an angle of said driving surfaces 15A and 15B thereby to transmit a torque from said rotor 7 to said rotors 8A and 8B at a speed rate $a = r/R$ ( $rA = rB = r$ defined for simple understanding ) and to output said torque powers through said gears 55A and 55B.

A reason for obtaining such a speed rate $a = r/R$ is as following hereinafter.

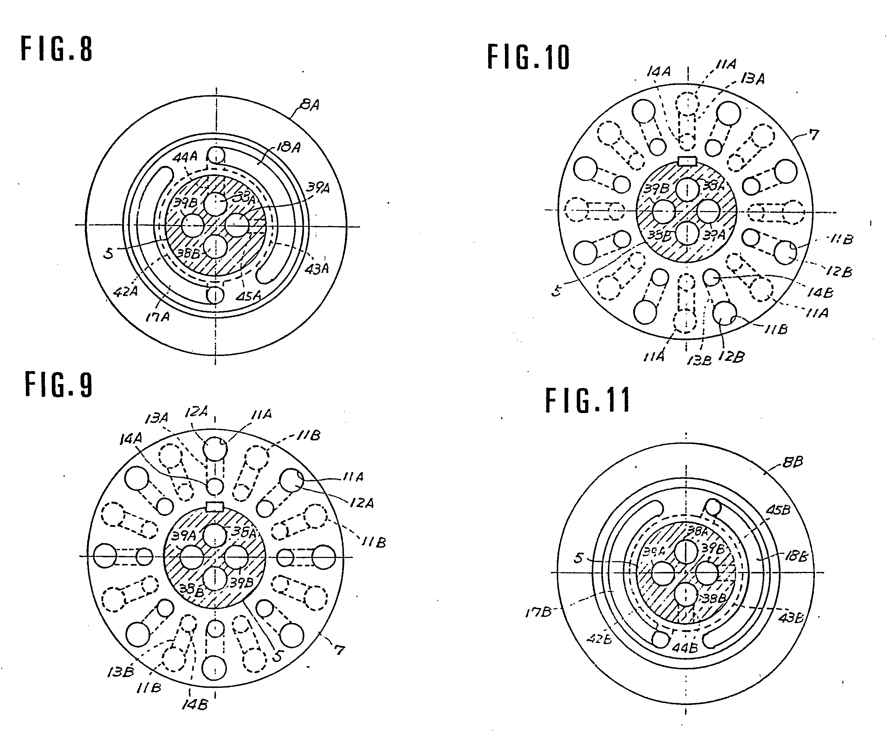

It is considered that the respective rotation speeds R and r according to said rotors 7 and 8A, 8B introduce pump delivery volume QA. Namely, as supposing said first rotor 7 rotated in a clockwise direction in Fig. 10, said plunger members 12A and 12B are pushed by said driving surfaces 15A and 15B so as to obtain the pump delivery volume $QA = Q$ in said pump ports 17A and 18A and said plunger members 12A and 12B follow to said driving surfaces 15A and 15B so as to obtain pump suction volume $QB = Q$ in said pump ports 17B and 18B. If it supposes that said second rotors 8A and 8B are rotated to the same direction as that of said first rotor 7 for a rotating speed r, the respective differential speeds between said rotors 7 and 8A, and 7 and 8B are $(R - r)$ and the pump delivery volume QA is:

$$QA = Q \cdot (R - r)/R \qquad (1)$$

And similarly, the suction volume QB in said pump ports 17B and 18B is:

$$QB = Q \cdot (R - r)/R \qquad (2)$$

While if said first rotor 7 is rotated for speed R, said pump rotor 20 in said pump assemblies 19A and 19B is integrally rotated for the same speed so that said plunger members 25A and 25B separated to two groups corresponding to said pump assemblies 19A and 19B follow to the driving surface 29 of said swash plate 30 disposed to said stator 21A so as to obtain said pump suction volume $QA'$ in said pump ports 34B and 35B, and are pushed to the driving surface 29 so as to obtain said pump delivery volume $QB'$ in said pump ports 34A and 35A. If pump fluid volumes as said pump rotor 20 is rotated for speed R, are $QA' = kQ$ and $QB' = kQ$,

$$QA' = QA = kQ = Q \cdot (R - r)/R \qquad (3)$$
$$QB' = QB = kQ = Q \cdot (R - r)/R \qquad (4)$$

from (3) and (4), $k = (R - r)/R \qquad (5)$

In this case, k is a coefficient between the delivery volume Q defined to an inclination of said driving surfaces 15A and 15B and the delivery volume $Q'$ defined to an inclination of said driving surface 29 when the first and pump rotor 7 and 20 are rotated for the same speed.

When the supporting plate 32 is regulated by suitable means so as to adjust the inclination of said driving surface 29, and if $k = 1$, said first rotor 7 is rotated for speed R but said second rotors 8A and 8B are not rotated because of $r = 0$.

When the inclination of said driving surface 29 is zero, i.e., said surface is perpendicular to the axis of said shaft 5, and $k = 0$ wherein said pump assemblies are not adapted not to drive the pumps, i.e., $QA = QA' = 0$ and $QB = QB' = 0$, said first rotor 7 is rotated for speed R but said second rotors 8A and 8B are rotated for the same speed R as a coupling member.

When it is defined as $0 < k < 1$, $R > r > 0$ is introduced. Accordingly, if k is selected for a suitable value by control of the inclination of said support plate 32, a desired speed rate is obtained with relative to said torque transmission assemblies 6A and 6B.

Furthermore, if said torque transmission assemblies are operated for an over-drive, it is necessary to define $k < 0$, and if said torque transmission assemblies are operated for a reverse rotation, it is necessary to define $k > 1$.

Under such condition, said hydraulic differential system is maintained in a static position wherein the spool member 58 is placed with its annular grooves 59 and 60 being away from said valve ports 59A and 59B, and 60A and 60B as shown in Fig. 1. And when it is desired that output gears 55A and 55B corresponding to said torque transmission assemblies 6A and 6B have a mutual gap for rotating speed, i.e., a differential rotation, said spool member 58 is shifted adjustably by suitable means such as a steering operation for car-drive so as to fit said grooves 59 and 60 to said valve ports 59A and 59B, and 60A and 60B within passage cross-sectional areas varied between their minimum and maximum.

In the event that the output gears 55A and 55B are individually rotated to both side driving wheels of car, the steering operation for car-drive results that in which as said torque transmission assembly 6A corresponding to said gear 55A has an increased pump delivery volume, said torque transmission assembly 6B, as supposing to receive the smaller load than that of the assembly 6A, has a decreased pump delivery volume due to the flowing between said valve ports 59A and 59B, while as said torque transmission assembly 6A has an increased pump suction volume, said torque transmission assembly 6B has a decreased pump suction volume, whereby a differential rotation is generated between said output gears 55A and 55B.

Though the first rotor 7 is adapted to use in common to said torque transmission assemblies 6A and 6B in the above-mentioned embodiment, said assemblies may be provided with two separated first rotors corresponding to said second rotors 8A and 8B respectively. Simularly, the pump rotor 20 adapted to use in common to said pump assemblies 19A and 19B may be also separated into two bodies corresponding to said pump stators 21A and 21B.

Furthermore, though the driving surfaces 15A and 15B corresponding to said torque transmission assemblies 6A and 6B are maintained to the same reverse inclination in order to accomplish the same operation as a differential gear device for car by means of said assemblies 6A and 6B and pressure regulating valve 52, in the case where said differential rotation control device of this invention is used for torque split of four driving wheels of car such that said torque transmission assembly 6A is adapted to drive the front wheels and said torque transmission assembly 6B is adapted to drive the rear wheels, said driving surfaces 15A and 15B may be predetermined to the different inclination in a reverse direction, whereby said torque transmission assemblies 6A and 6B have mutually different pump delivery and suction volumes for different speed rates and basic torque split when said valve 57 is adjustably operated to flow the pressed fluid or oil between valve ports 59A and 59B, and 60A and 60B so as to control torque split rate. In this case, the control of said pressure regulating valve 57 may be linkaged to means such as a gravity sensor used to ascent and descent and a running speed sensor.

Although the first rotor 7 corresponding in common to said torque transmission assemblies 6A and 6B is adapted to an input member and the second rotors 8A and 8B are adapted to output members, two separated first rotors may be used as output members and in reverse, said second rotors may be used as common input members wherein said rotating shaft 5 should be separated into two output shafts and said second rotors 8A and 8B may be uniformed to an input member.

In this modification, such consideration according to the pump delivery volume QA of said first rotors and the rotating speeds R and r corresponding to said second rotors 8A and 8B ( or a common rotor 8 ), and first rotors 7A and 7B are as follows.

Namely, if said second rotors 8A and 8B ( or 8 ) are rotated in a clockwise direction in Fig. 10 under $r = 0$, the pump delivery volume in each said pump ports 17A and 18A is given as $QA = Q$ as said plunger members 12A and 12B are pushed by means of said driving surfaces 15A and 15B, while the pump suction volume in each said pump ports 17B and 18B is given as $QB = Q$ as said plunger members 12A and 12B are guided to said driving surfaces 15A and 15B. If said first rotors 7A and 7B are rotated in the same direction as that of said second rotors 8A and 8B ( or 8 ) under a speed (r), a differential rotation between said first and second rotors is ( R - r ) and the pump delivery volume QA corresponding to each said pump ports 17A and 18A is;

$$QA = Q \cdot ( R - r )/R \qquad (1)'$$

and similarly, the pump suction volume QB corresponding to each said pump ports 17B and 18B is:

$$QB = Q \cdot ( R - r )/R \qquad (2)'$$

In the other hand, if said first rotors 7A and 7B are rotated for a speed (r), said pump rotor 20 corresponding to said pump assemblies 19A and 19B is rotated for the same speed (r), whereby the pump suction volume in each said pump ports 34B and 35B is given as $QA'$ as said plunger members 25A and 25B are guided to said driving surface 29, while the pump delivery volume in each said pump ports 34A and 35A is given as $QB'$ as said plunger members 25A and 25B are pushed by said driving surface 29. In this case, if the pump suction volume $QA' = kQ$ and the pump delivery volume $QB' = kQ$ as said pump rotor 20 is rotated for a speed R, then the pump volumes $QA'$ and $QB'$ as said pump rotor 20 is rotated for a speed r, are respectively;

$$QA' = kQ \cdot ( r/R ) \qquad (3)'$$
$$QB' = kQ \cdot ( r/R ) \qquad (4)'$$

In this case, k is a coefficient between the delivery volume Q defined to an inclination of said driving surfaces 15A and 15B and the delivery volume $Q'$ defined to an inclination of said driving surface 29 when the second and pump rotors 8 and 20 are rotated for the same speed.

The next relative function is introduced from $(3)'$ and $(4)'$.

$$QA = Q \cdot ( R - r )/R = QA' = k \cdot Q \cdot ( r/R )$$
$$QB = Q \cdot ( R - r )/R = QB' = k \cdot Q \cdot ( r/R )$$

from them

$$k = ( R - r )/r \qquad (5)'.$$

When the supporting plate 32 is regulated by suitable means so as to adjust the inclination of said driving surface 29, and if $k = 1$,

$k = 1 = ( R - r )/r$ and then $r = R/2$.

Namely, when said second rotors 8A and 8B ( or 8 ) are rotated for a speed R, said first rotors 7A and 7B are rotated for a speed R/2.

When the inclination of said driving surface 29 is zero, and $k = 0$ wherein said pump assemblies are not adapted not to drive the pumps, i.e., $QA' = QA = 0$ and $QB' = QB = 0$, said first rotors 7A and 7B are integrally driven with said second rotors 8A and 8B ( or 8 ) as a coupling member wherein it is defined as $R = r$.

When it is defined as $0 < k < 1$, $R > r > R/2$ is introduced. Furthermore, if said torque transmission assemblies are operated for an over-drive, it is necessary to define $k < 0$, namely the driving surface 29 should be inclined over a plane normal to the axis of said rotating shaft 5 with its angle having a minus range.

Though said pump assemblies 19A and 19B have a common pump rotor 20 in this embodiment, they may be provided with two separated pump rotors ( the reference numbers may be 20A and 20B ) which includes the respective cylinder bores 24A and 24B, and the corresponding plunger members 25A and 25B, and two separated swash plates ( the reference numbers may be 30A and 30B ) with the respective driving surface ( the refernce numbers may be 29A and 29B ) corresponding to said pump stators 21A and 21B, said swash plates being rotatably supported to the corresponding supporting plates ( the reference numbers may be 32A and 32B ). In this modification, pump ports 34A and 34B, and 35A and 35B may be provided according to said pump stators to correspond with said ports 27 and 28. Furthermore, in this case, the constructions of said pump rotors and stators are mutually swopped in such manner that said pump rotors 20A and 20B include swash plates and the relative members and said pump stators 21A and 21B include cylinder bores 24A and 24B, plunger members 25A and 25B and the relative portions.

Though the above-mentioned embodiment is an arrangement where said torque transmission assemblies 6A and 6B are disposed to one side of said device, and said pump assemblies 19A and 19B are disposed to the other side, said torque transmission assemblies may be positioned to the center of said device and the respective pump assemblies 19A and 19B separated to both sides, or may be in reverse positions.

Said pressure regulating valve 57 may be made so as to be used for two conditions at one of which said valve is wholly opened and at the other of which it is closed. In this case, said open condition is available to a general running mode and said close condition is to a high speed and straight running mode as a differential lockage.

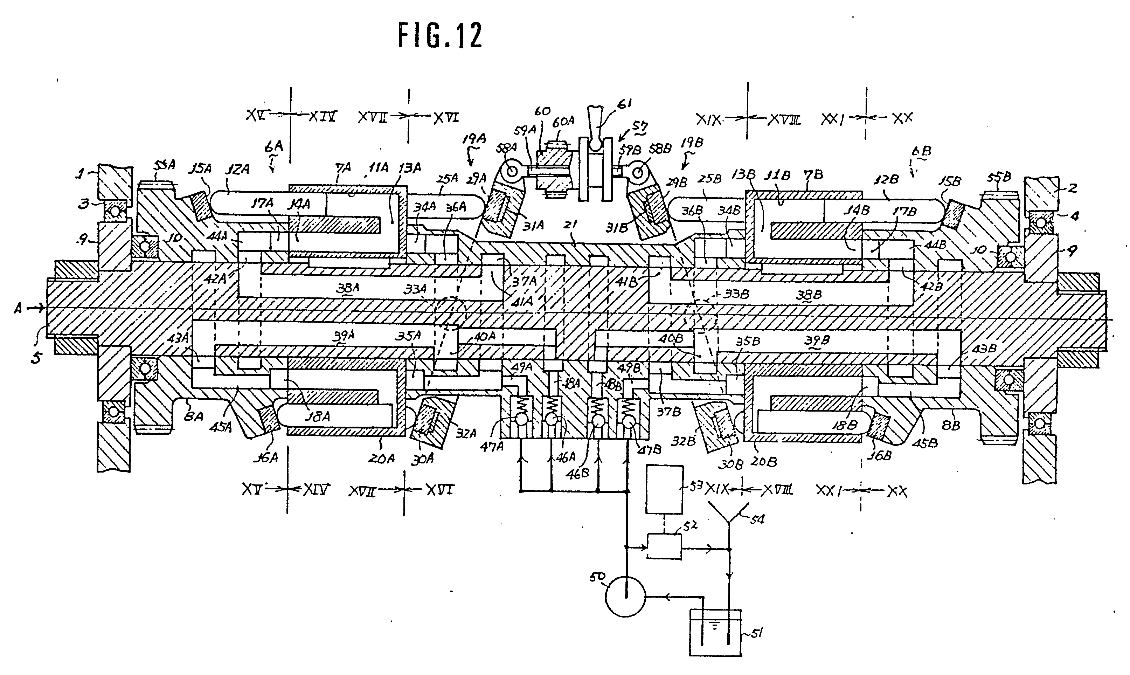

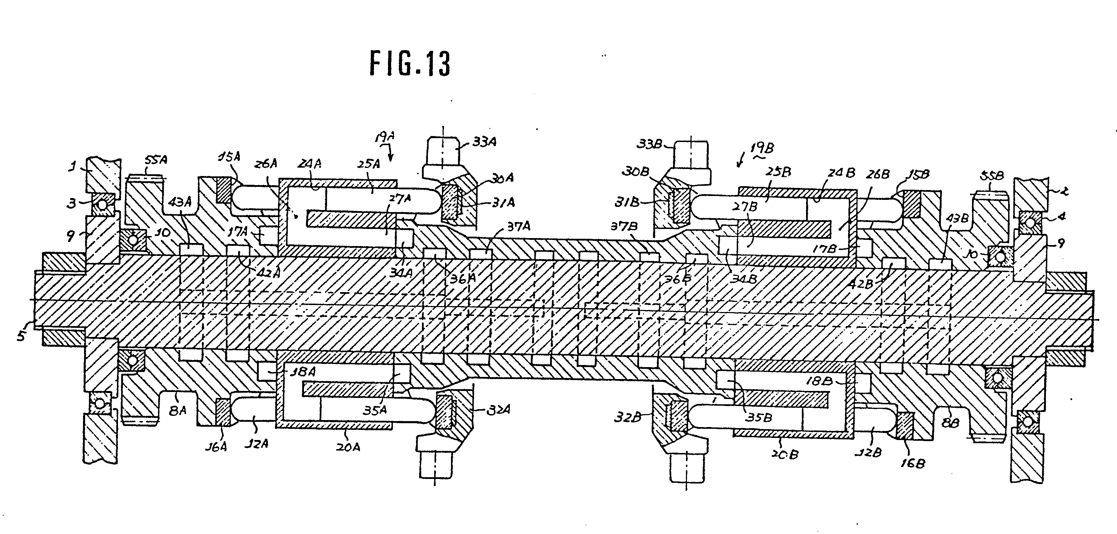

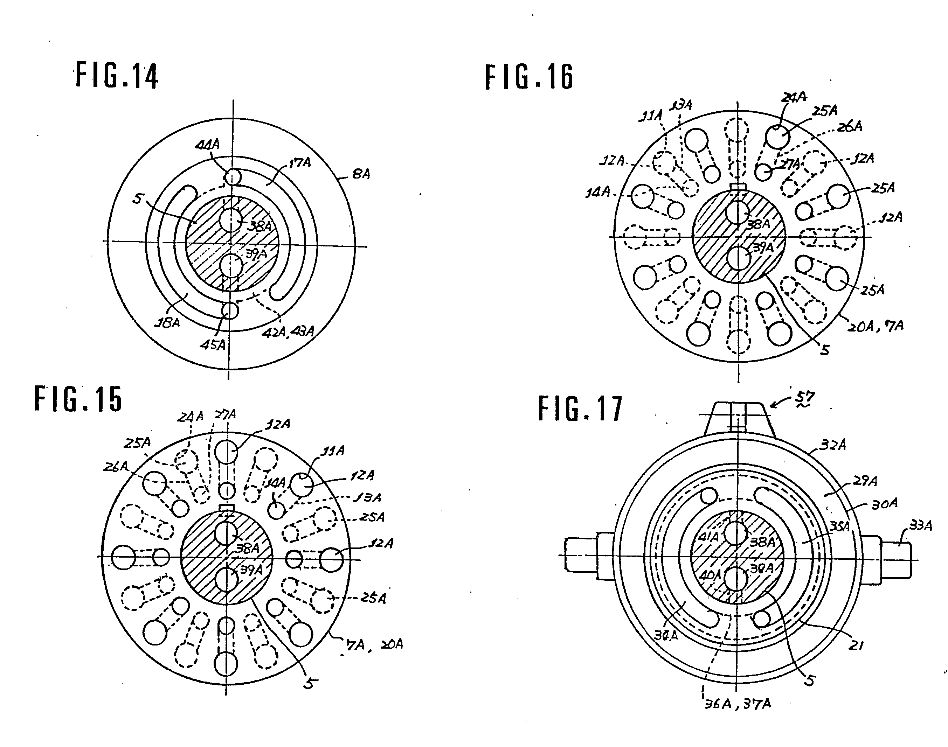

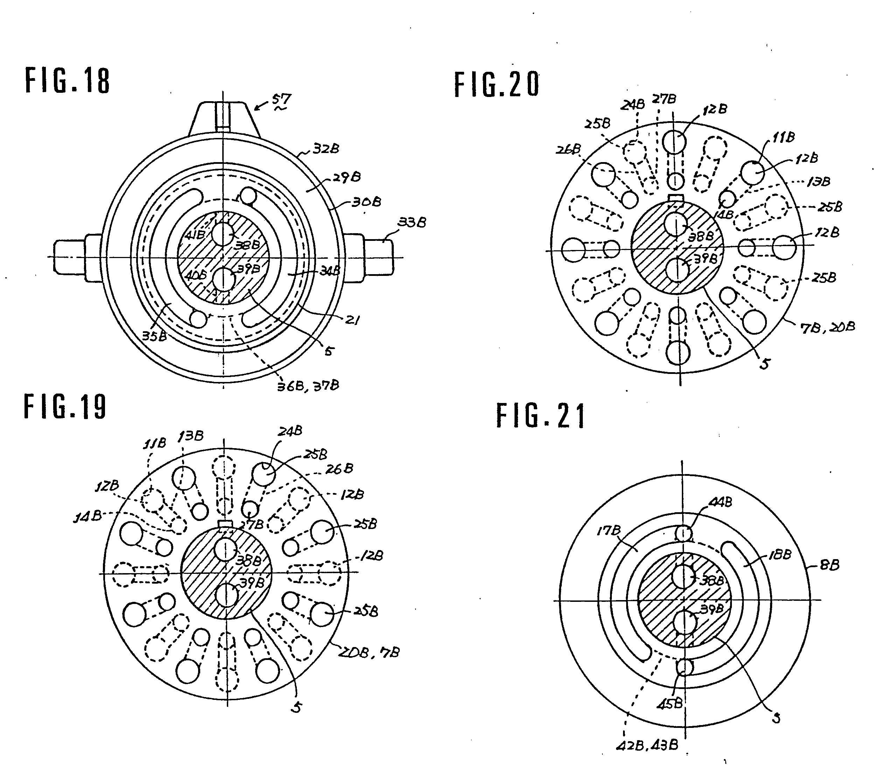

A second embodiment of this invention is illustrated to Figs. 12 to 21. In this embodiment, the members and portions substantially and functionally identified to them of the first embodiment are illustrated in the drawings as the same reference numbers. This embodiment specially includes two first rotors 7A and 7B corresponding to torque transmission assemblies 6A and 6B, and two pump rotors 20A and 20B corresponding to pump assemblies 19A and 19B and integrally formed to said first rotors 6A and 6B respectively. Furthermore, this embodiment includes a pump stator 21 adapted instead of both pump stators in the first embodiment, swash plates 30A and 30B with driving surfaces 29A and 29B adjustably inclined to a cross plane normal to the axis of said rotating shaft 5, and supporting plates 32A and 32B having thrust bearings 31A and 31B respectively through which said swash plates are rotatably supported thereto and pairs of axes 33A and 33B perpendicular to the axis of said shaft 5 so as to support said supporting plates 32A and 32B rotatably to said stator 21.

A specific means of this embodiment is means for regulating fluid delivery for a rotation which is included in said pump assemblies 19A and 19B. Said regulating means in this embodiment is constructed to a turn-buckle assembly 57 instead of the pressure regulating valve of the first embodiment. Said turn-buckle means consists of two rods 59A and 59B with male screws being threaded thereto in a reverse direction, said rods pivoted to said supporting plates 32A and 32B by means of pivot pins 58A and 58B, and a control member 60 rotatably screwed to said rods individually, said control member 60 having a gear tooth 60A which is intermeshed to a driving gear included in a control system ( not shown ) in a rotating direction, and being operated in the lengthwise direction of said rods by means of a shifter 61 which is driven by a differential control system ( not shown ).

The driving operation of said torque transmission assemblies and pump assemblies in the second embodiment is substantially identified to that of the first embodiment. In this case, said turn-buckle means 57 is settled in a neutral position at which said driving surfaces 29A and 29B are maintained to the same angles. In order to cause a differential rotation to be given to the output gears 55A and 55B of said torque transmission assemblies 6A and 6B, said shifter 61 is shifted to the lengthwise direction of said rods 59A and 59B ( left or right in Fig. 12 ) so as to move said rods 59A and 59B together with said control member 60 whereby the supporting plates 32A and 32B are inclined to different angles with either one of inclination of said driving surfaces 29A and 29B being increased and the other being decreased. Accordingly, the speed rate of one of said torque transmission assemblies is increased and the speed rate of the other is decreased so as to generate a differential operation between said output gears 55A and 55B. In the event that said shifter is linkaged to the steering operation for car, a transmission device can be assembled forcedly to give a differential operation between both side driving wheels of car which are interconnected with said output gears 55A and 55B.

In this second embodiment, said shifter 61 may be rotated in order to vary the inclination of said driving surfaces 29A and 29B in the same rate thereby to adjust the speed rates of said torque transmission assemblies.

The differential rotation control device of this second embodiment may be modified as those described in the first embodiment.

## Claims

(1) A differential rotation control device with a hydraulic assembly characterized by comprising two torque transmission assemblies each of which includes a first rotor with a pump-driven means and a second rotor with a pump-driving means caused said pump-driven means to be pumped by a differential rotation between said first and second rotors, said second rotor having an inlet port receiving fluid to be pumped and an outlet port delivering said fluid pumped; two pump assemblies corresponding to said torque transmission assemblies respectively, said pump assemblies including two pumps each having a pump inlet port communicated with the outlet port and a pump outlet port communicated with the inlet port respectively in accordance with said torque transmission assemblies; and means for controlling fluid flows between said pump inlet and pump outlet ports of each of said pump assemblies individually.

(2) A differential rotation control device with a hydraulic assembly claimed in claim 1 in which said pump includes means for regulating fluid delivery for a rotation.

(3) A differential rotation control device with a hydraulic assembly characterized by comprising two torque transmission assemblies each of which includes a first rotor with a pump driven means and a second rotor with a pump driving means caused said pump-driven means to be pumped by a differential rotation between said first and second rotors, said second rotor having an inlet port receiving fluid to be pumped and an outlet port delivering said fluid pumped; and two pump assemblies corresponding to said torque transmission assemblies respectively, said pump assemblies including two pumps each having a pump inlet port communicated with the outlet port and a pump outlet port communicated with the inlet port respectively in accordance with said torque transmission assemblies, said pump having means for regulating fluid delivery for a rotation.

(4) A differential rotation control device with a hydraulic assembly claimed in claim 3 in which said regulating means consists of an adjustable swash plate, and the corresponding pump comprises an opposite rotor body, a plurality of cylinder bores formed to said rotor body in a manner to be arranged on a prescribed pitch circle co-axial to the rotation of said rotor body, and a plurality of plunger members slidably inserted into the cyinder bores respectively in a manner to be guided by said swash plate, so that the relative regulation between both regulating means of said two pump assemblies is carried out so as to regulate fluid flows of said pumps in reverse.

(5) A differential rotation control device with a hydraulic assembly claimed in claim 4 in which said regulating means further includes an dividual controller for controlling the inclination of said adjustable swash plate under a condition maintaining said relative regulation between said both regulating means.

# FIG. 1

EP 0 384 759 A2

# FIG.2

EP 0 384 759 A2

FIG.4

FIG.6

FIG.3

FIG.5

FIG.7

EP 0 384 759 A2

FIG.10

FIG.11

FIG.8

FIG.9

EP 0 384 759 A2

# FIG.12

FIG.13

EP 0 384 759 A2

FIG.16

FIG.17

FIG.14

FIG.15

FIG.18

FIG.20

FIG.19

FIG.21

EP 0 384 759 A2